# EUROPEAN PATENT APPLICATION

(11) **EP 4 030 327 A1**
(43) Date of publication of application: **20.07.2022**
(21) Application number: 21151580.4
(22) Date of filing: 14.01.2021
(51) Int. Cl.: G06F 21/62, G06F 21/64, H04L 9/00, H04L 9/32

(54) **METHOD AND SYSTEM FOR VALIDATING A TRANSACTION AGAINST SERVICE LEVEL AGREEMENT CONDITIONS IN A DISTRIBUTED LEDGER**

(71) Applicant: ABB Schweiz AG, 5400 Baden (CH)
(72) Inventor: KOZHAYA, David, 8953 Dietikon (CH); LOCHER, Thomas, 8050 Zürich (CH); DAN, Andrei, 8057 Zürich (CH)
(74) Representative: Zimmermann & Partner Patentanwälte mbB

(57) **Abstract**

A method for validating a transaction against service level agreement (SLA) conditions in a distributed ledger (30) associated with a plurality of validating parties (34) is described. The method comprises the steps of:
providing a set of SLA conditions agreed between at least two of a plurality of contracting parties;
providing transaction data (12) from at least one of the plurality of contracting parties intended for one of the set of SLA conditions;
encoding in a contract encoder (21) the set of SLA conditions to generate a private digital SLA (31) stored in the distributed ledger (30);
encoding in a data encoder (11) the transaction data (12) to generate a private transaction package (13);
processing the private transaction package (13) in the private digital SLA (31) to generate a positive or negative validation result (33);
wherein the content of the SLA conditions and the content of the input data are not revealed in the distributed ledger (30).

Further, a system for validating a transaction against service level agreement (SLA) conditions in a distributed ledger (30) associated with a plurality of validating parties (34) is described.

## Description

### TECHNICAL FIELD

Embodiments of the present disclosure relate to a method for validating a transaction against service level agreement (SLA) conditions in a distributed ledger. Further, embodiments of the present disclosure relate to a system for validating a transaction against service level agreement (SLA) conditions in a distributed ledger.

### BACKGROUND

Today, service level agreements (SLA) are part of virtually all industrial service contracts across a wide range of use case scenarios and domains, where terms and conditions of the provided service are fully defined. SLAs specify the general terms and conditions governing a certain process between two or more participants. Generally, such participants need to perform transactions, which are only accepted if they satisfy the SLA rules.

In the industrial service field where an industrial service provider may provide services in a plant or in an application for a customer SLAs typically include sensitive information such as the personal contact details of the customer and specific details concerning the equipment within the customer's plant, substation, or even residential premise, and how this equipment is being operated. Efforts attempting to automate the execution of such SLAs, e.g., implementing SLAs as smart contracts within distributed ledgers, involve digitalizing the SLA terms and conditions as well as certain KPIs related to how things are operated and maintained at the customer side. Such digitalization exposes the encoded information needed to automate the terms and conditions of an SLA to potential privacy risks with varying severity.

The trust that distributed ledger-based networks provide with no need for supervision by a central authority derives from the transparency of the networks to at least all the participants of the network (and in the case of public networks, to the public at large). This transparency, however, can reduce or even eliminate any privacy or confidentiality that participants need or seek when interacting with the network or its participants. For example, in the case of public networks, any interested person can access and inspect the distributed ledgers on the networks to obtain detailed information on all transactions that are represented on the ledgers since the inception of the networks as the ledgers are, in at least most cases, largely immutable. In some implementations, the lack of privacy or confidentiality can render the use of a public ledger-based network untenable.

Further, even in the case of private distributed ledgers, many parties who may not even be part of the SLA are involved in validating transactions related to that SLA and hence can observe the encoded data. Thus, any validating party within a private distributed ledger might observe and misuse information in transactions for malicious or greedy purposes. Leaking such information can have various implications including significant financial losses as a result of exploiting sensitive information. Consequently, distributed ledgers are often not considered a viable solution due to data privacy concerns, despite the great potential in terms of automation.

Accordingly, in view of the above, there is a demand for providing an improved method for validating a transaction against service level agreement (SLA) conditions in a distributed ledger which safeguards the privacy of all transaction and contract data.

### SUMMARY

In light of the above, a method and system for validating a transaction against service level agreement (SLA) conditions in a distributed ledger associated with a plurality of validating parties according to the independent claims are provided. Further aspects, advantages, and features are apparent from the dependent claims, the description, and the accompanying drawings.

According to an aspect of the present disclosure, a method for validating a transaction against service level agreement (SLA) conditions in a distributed ledger associated with a plurality of validating parties comprises the steps of:

providing a set of SLA conditions agreed between at least two of a plurality of contracting parties;

providing transaction data from at least one of the plurality of contracting parties intended for one of the set of SLA conditions;

encoding in a contract encoder the set of SLA conditions to generate a private digital SLA stored in the distributed ledger;

encoding in a data encoder the transaction data to generate a private transaction package;

processing the private transaction package in the private digital SLA to generate a positive or negative validation result;

wherein the content of the SLA conditions and the content of the input data are not revealed in the distributed ledger.

Accordingly, compared to the state of the art, the method of the present disclosure provides for an improved implementation and execution of smart contracts in a privacy-preserving manner. Thereby, a validating party of the distributed ledger may contractually validate transactions without being able to obtain any detailed information about the content of the transaction itself nor about the SLA terms and conditions. However, the validation of the transaction within the SLA terms and conditions may still be duly performed in a sufficient timeframe. Thus, the method of the present disclosure enables digital SLAs in such a way that the concrete values in the SLA conditions as well as transaction content will be hidden from validating parties while preserving the capability to validate the transaction without further delay.

According to another aspect of the present disclosure, a system for validating a transaction against service level agreement (SLA) conditions in a distributed ledger associated with a plurality of validating parties comprises a contract encoder configured to encode a set of SLA conditions agreed between a plurality of contracting parties to generate a private digital SLA stored in the distributed ledger; a data encoder configured to encode transaction data provided by at least one of the plurality of contracting parties to generate a private transaction package; wherein the distributed ledger is configured to process the private transaction package in the private digital SLA to generate a positive or negative validation result; wherein the content of the SLA conditions and the content of the input data are not revealed in the distributed ledger.

Accordingly, compared to the state of the art, the system of the present disclosure can be integrated into a distributed ledger platform for contractually validating transactions against a set of SLA conditions in a privacy-preserving manner. Further, the system of the present disclosure ensures a reliable and sufficiently quick validating function and also provides for scalability because more validating parties can be dedicated to validate transactions keeping high privacy standards.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic diagram of the system for validating a transaction against service level agreement (SLA) conditions in a distributed ledger according to embodiments described herein;
- Fig. 2: shows a data flow through the data encoder to the distributed ledger according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

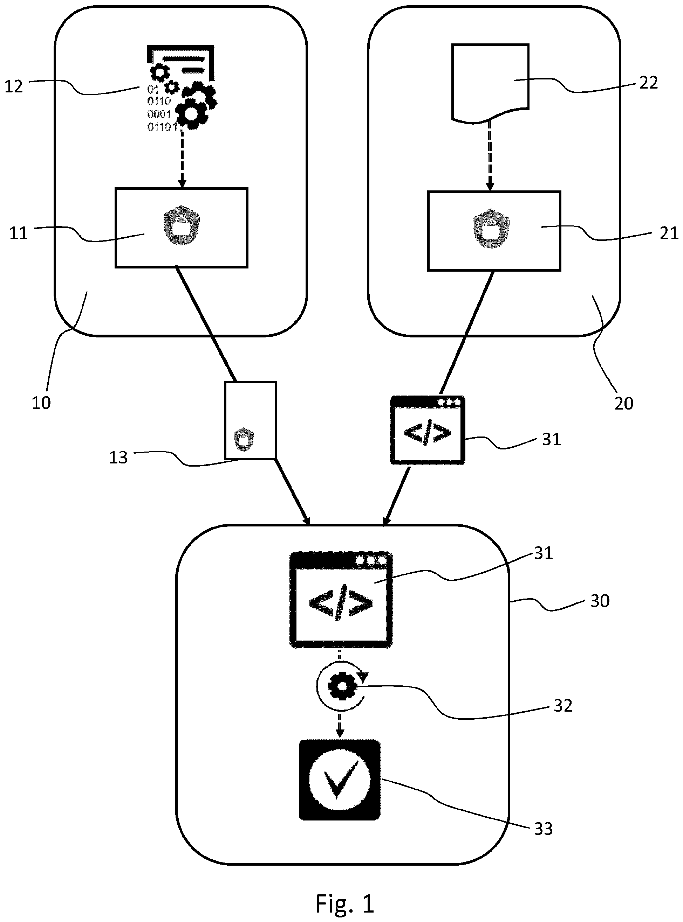

Fig. 1 depicts a schematic diagram of an embodiment of a system for validating a transaction against service level agreement (SLA) conditions in a distributed ledger. Also, the method for validating a transaction against service level agreement (SLA) conditions in a distributed ledger and its detailed steps can be explained by the following description.

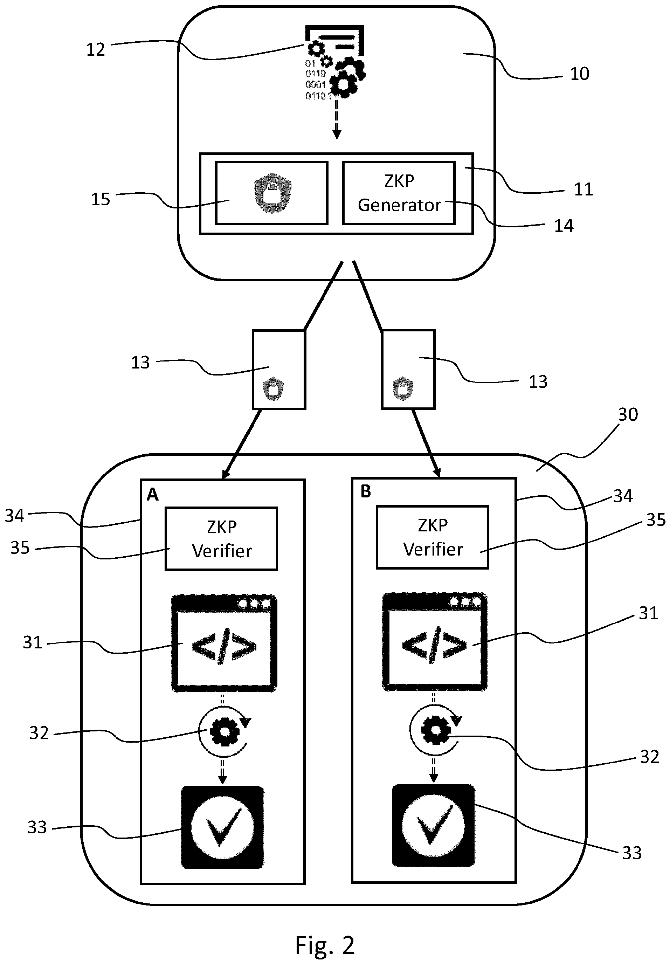

The system comprises a device or application 10 generating or having input data 12 which is transmitted to a data encoder 11 within the device or application 10. The device or application 10 can be any raw data generating apparatus or software located in a sensor, a control system, a monitoring equipment, or a computer. Alternatively, instead of automatically generating input data 12 in a device 10, a user may also generate the input data 12 or raw data 12 via a user interface located in the device or application 10. The input or raw data 12 may be a single value generated by a sensor or a plurality of values originating from different sources within the device 10 associated with one or more transactions. The encoding of the input data 12 occurs in the data encoder 11 where all input data 12 of a transaction is collected. The details of the encoding process within the data encoder 11 are described with respect to Fig. 2 further below.

In addition to the device or application 10 the system comprises a contract encoder 21 which may be controlled by a contracting party, i.e. a contract owner 20, and which may be configured to receive the terms and conditions of a contract having been agreed between at least two contracting parties. The terms and conditions of the contract represent the service level agreement (SLA) and are available in digital form, in logical expressions which can be digitally worded with parameters, values, and operators, as a digital SLA 22. This digital SLA 22 is input in the contract encoder 21 such that a private digital SLA 31 is generated. The private digital SLA 31 is a generated smart contract, i.e. source code that encodes and encrypts the terms and conditions, i.e. the logical expressions of the digital SLA 22 but can preserve the privacy of any concrete values residing in the digital SLA 22. In other words, the concrete values and also the purpose and the semantics of any conditions in the digital SLA 22 are hidden through the encoding and encrypting procedure occurring in the contract encoder 21. An example for values X, Y, and Z in conditions are "a device must be inspected every X days" or "the measured voltage may deviate from Y by at most Z %". The contract encoder 21 ensures that all conditions of an SLA are translated into logical expressions that can be evaluated to true or false given a specific set of input parameters as will be explained in more detail below.

The next block in the system according to the embodiment shown in Fig. 1 is the distributed ledger 30 where the validation of the transaction data with respect to one or more SLAs takes place. The encoded and encrypted input data 12 reside in the private transaction package 13 which is transferred to and stored in the distributed ledger 30. Also stored in the distributed ledger 30 is the private digital SLA 31. In order to verify whether a transaction in a customer's device 12 satisfies the terms and conditions agreed upon between the customer and a second contracting party, for example a service provider, for a specific transaction, the private transaction package 13 is processed by a validating party 34 in a respective private digital SLA 31. Thus, it is checked if each of the encoded terms and conditions in the digital SLA 22 holds for a given transaction with the input data 12 without learning anything about the specific content in the SLA 22 or the specific data values in the transaction.

The distributed ledger 30 is a data repository where a consensus of replicated, shared, and synchronized digital data are geographically spread across multiple sites, countries, or institutions. Unlike with a distributed database, there is no central administrator. In the embodiments disclosed herein, the distributed ledger 30 may be shared between a plurality of contracting and/or validating parties who have an interest in finding out the validity of a transaction with respect to an SLA 22. Once a private transaction package 13 has been transferred to a validating party 34 in the distributed ledger 30 and in particular to the corresponding private digital SLA 31 that involves the respective input data 12 in its terms and conditions, the private digital SLA 31 starts the validation process 32 the outcome of which is the validation result 33. As there may be more than one private digital SLA 31 associated with our private transaction package 13 there could be a plurality of private digital SLAs 13 even for a single validating party 34 processing the same private transaction package 13. In addition, there may be more than one validating party 34 wanting to validate a transaction represented by the private transaction package 13 against one or more private digital SLAs 31. In other words, more than one private digital SLA 31 may start a validation process 32 with the private transaction package 13 as input and eventually obtain a validation result 33. After each validation party 34 has performed its validation process 32 with respect to a private digital SLA 31 based on the private transaction package 13 and obtained a corresponding validation result 33, the validation parties 34 may run a consensus mechanism within the distributed ledger 30 to reach an agreement on the validity of the transaction.

With respect to Fig. 2 and according to the embodiments described herein, the details of the encoding and encrypting as well as validation processes will now be explained. In the schematic diagram of Fig. 2, the encoding of the contract is omitted as this is usually performed only once for every SLA and optionally upon any amendment of an existing SLA. As can be seen, the data encoder 11 includes two functional entities, the data encryptor 15 and the ZKP generator 14. The data encryptor 15 is configured to encrypt the input or raw data 12 to hide the actual input values. This is preferably performed using an encryption method with symmetric-key or asymmetric-key schemes. Most modern encryption methods use asymmetric or public-key encryption which is also used in the embodiments described herein. As a second step, a zero-knowledge proof (ZKP) is generated in the ZKP generator 14 which is later used in the verification phase to attest the validity of the input data 12 for a given private digital SLA 31. Then, the encrypted input data, public key material from the data encryptor 15, a reference to one or more private digital SLAs 31, and the ZKP are packaged into one private transaction package 13.

Said private transaction package 13 may be transmitted to the distributed ledger 30 and made available for every validating party 34 which may run its own verification process 32 shown in the two columns marked "A" and "B" in Fig. 2. To this end, each transaction party 34 may load the private transaction package 13, decompose it into the components described above and furthermore load the respective private digital SLA 31. In addition, the ZKP verifier 35 and the ZKP from the private transaction package 13 are used to validate the transaction with respect to the given input data 12 and the private digital SLA 31 arriving at a validation result 33. The fundamental properties of the zero-knowledge proof (ZKP) procedure within the validation process 32 are completeness, soundness and zero-knowledge meaning that the honest verifier following the protocol correctly will be convinced by an honest prover of the fact that the statement is true; that if the statement is false, no cheating prover can convince the honest verifier that the statement is true; and that the verifier only learns about the fact that the statement is true, and particularly in the present case no details about the transaction or about the terms and conditions of the SLA.

As soon as the plurality of validation parties 34 have performed the validation process 32 within the distributed ledger 30 and have come to their individual validation result 33, these validation parties 34 may trigger the consensus mechanism in order to finalize the validation result 33 of the respective transaction. The outcome of this consensus mechanism, i.e. whether the corresponding transaction satisfies the terms and conditions of the associated SLA, can then be committed, i.e. finally written to and stored in the distributed ledger 30.

According to embodiments, which can be combined with other embodiments described herein, the encoding and encrypting of the SLA 22 in contract encoder 21 may comprise translating all SLA conditions into logical expressions that can be evaluated to true or false given a specific set of input parameters. The logical expressions may include operations and constant values wherein the operations comprise at least one of the group selected from mathematical operations, logical operations, and set operations. The mathematical operations may include addition, multiplication, subtraction, and division; the logical operations or comparisons may include greater than, smaller than, or equality operators; and set operations may include an operation whether a parameter lies within a closed or open set or range. Other types of operators may also be possible, however, the list of described operators should be sufficient to cover a very broad range of potential SLA terms and conditions.

According to embodiments, a number of encryption techniques may be used to encrypt data both in the data encoder as well as in the contract encoder. Examples for the encryption of mathematical operations including addition, multiplication, subtraction, and division are the following.

Paillier's partially homomorphic encryption scheme, as for example described by Pascal Pallier, "Public-key cryptosystems based on composite degree residuosity classes", International Conference on the Theory and Applications of Cryptographic Techniques, Springer, Berlin, Heidelberg, 1999, supports additive homomorphism allowing to perform addition and subtraction operation in the ciphertext space. In order to verify the computation result, the ZKP of knowledge of the n-th power may be used, as for example explained in I. Damgård, M. Jurik, and J. Nielsen, "A Generalization of Paillier's Public Key System with Applications to Electronic Voting," International Journal of Information Security, vol. 9, pp. 371-385, 04 2003. Fully homomorphic encryption schemes, which offer multiplicative homomorphism as well, may exhibit substantial overhead, making them impractical in real-life systems. To this end, embodiments described herein may realize privacy-preserving multiplication and division operations on floating-point numbers using an extension of the ZKP which is also described in Damgård. This extension describes a value as a mantissa multiplied by a base raised to an exponent. For a multiplication/division result it is verified that the mantissa corresponds to the product of the operands' mantissas and the exponent is the sum of the operands' exponents. The mantissa of the encoded number is hidden and used in the ZKP, whereas as exponents are given in plaintext.

Operations where ranges of parameters are dealt with may utilize according to embodiments described herein the implementation of Boudot's range proof with tolerance, described for example in F. Boudot, "Efficient Proofs that a Committed Number Lies in an Interval," Advances in Cryptology - EUROCRYPT 2000, International Conference on the Theory and Application of Cryptographic Techniques, Bruges, Belgium, May 2000. In order to support floating-point numbers, range proofs are implemented over mantissas as well. This requires rescaling the interval values (which is public information), i.e. their base and exponent. Range proofs operate over commitments, hence an additional ZKP is included to state that the associated encryption hides the exact same value as the one being hidden in the commitment.

For comparison operations, either one or both operands x and y can be hidden. Let Cₓ and C_{y} denote the encryptions of x and y, respectively. The first step requires finding a value z, such that when added to x it is obtained that x + z = y. Naturally, z could be added to y as well. This addition can be carried out in the ciphertext space since the operands are encrypted using an additively homomorphic encryption scheme. This step reduces the inequality to an equality test, which can be implemented using a ciphertext equality ZKP (see for example F. Boudot cited above). Finally, a range proof, as defined above, is used to verify that z is positive.

For set inclusion operations, a scheme based on a partially homomorphic encryption scheme that hides all elements in a set plus the element that is tested for set inclusion has been proposed in T. F. Dahlin, "Paillier Zero-Knowledge Proof," The Daylighting Society, Tech. Rep., December 2016, and may be used in embodiments described herein. The concept of k-anonymity can be introduced to verify that an element is in a subset of size k instead. If the element is in the subset, it must be part of the entire set. This modification boosts performance as a smaller number of elements need to be considered, trading off privacy for performance. Furthermore, alphanumeric characters can be supported by having a proper bij ective mapping to numbers.

Operations of processes and methods described herein can be performed in any suitable order unless otherwise indicated or otherwise clearly contradicted by context. Processes or methods described (or variations and/or combinations thereof) can be performed under the control of one or more computer systems configured with executable instructions and can be implemented as code, i.e. for example as executable instructions, one or more computer programs or one or more applications, executing collectively on one or more processes, by hardware or combinations thereof. In some embodiments, the code can be stored on a computer-readable storage medium, for example, in the form of a computer program comprising a plurality of instructions executable by one or more processes. In some embodiments, the computer-readable storage medium is non-transitory.

In view of the above, it is to be understood that embodiments as described herein beneficially provide for an optimized method and system for validating a transaction against service level agreement (SLA) conditions in a distributed ledger which safeguards the privacy of all transaction and contract data.

While the foregoing is directed to embodiments, other and further embodiments may be devised without departing from the basic scope, and the scope is determined by the claims that follow.

### REFERENCE NUMBERS

- 10: device or application
- 11: data encoder
- 12: input or transaction data
- 13: private transaction package
- 14: ZKP generator
- 15: data encryptor
- 20: contract owner
- 21: contract encoder
- 22: digital SLA
- 30: distributed ledger
- 31: private digital SLA
- 32: validation process
- 33: validation result
- 34: validating party
- 35: ZKP verifier

## Claims

1. A method for validating a transaction against service level agreement (SLA) conditions in a distributed ledger (30) associated with a plurality of validating parties (34), the method comprising the steps of:
providing a set of SLA conditions agreed between at least two of a plurality of contracting parties;
providing transaction data (12) from at least one of the plurality of contracting parties intended for one of the set of SLA conditions;
encoding in a contract encoder (21) the set of SLA conditions to generate a private digital SLA (31) stored in the distributed ledger (30);
encoding in a data encoder (11) the transaction data (12) to generate a private transaction package (13);
processing the private transaction package (13) in the private digital SLA (31) to generate a positive or negative validation result (33);
wherein the content of the SLA conditions and the content of the input data are not revealed in the distributed ledger (30).

2. Method of claim 1, wherein the encoding in a contract encoder (21) comprises translating all SLA conditions into logical expressions that can be evaluated to true or false given a specific set of input parameters during the processing step (32).

3. Method of any of claims 1 or 2, wherein the logical expressions include operations and constant values wherein the operations comprise at least one of the group selected from mathematical operations, logical operations, and set operations.

4. Method of any of claims 1 to 3, wherein the encoding in a data encoder (11) comprises the steps of:
encrypting the transaction data (12) with a private key;
generating a Zero-Knowledge Proof (ZKP) in a ZKP generator (14);
packaging the encrypted transaction data including a public key, a reference to a private digital SLA, and the ZKP into a transaction package;
signing the transaction package to generate a private transaction package (13); and
storing the private transaction package (13) in the distributed ledger (30) available for validation processing (32).

5. Method of claim 4, wherein processing (32) the private transaction package (13) in the private digital SLA (31) comprises:
loading the private transaction package (13), the referenced private digital SLA (31) and the ZKP;
using a ZKP verifier (35) to validate the encrypted transaction data with respect to the referenced private digital SLA (31) yielding a positive or a negative validation result (33).

6. Method of claim 5, wherein the each of the plurality of validating parties (34) uses their validation result (33) to run a consensus mechanism to reach an agreement of the validity of the transaction in the distributed ledger (30).

7. System for validating a transaction against service level agreement (SLA) conditions in a distributed ledger (30) associated with a plurality of validating parties (34), the system comprising:
a contract encoder (21) configured to encode a set of SLA conditions agreed between a plurality of contracting parties to generate a private digital SLA (31) stored in the distributed ledger (30);
a data encoder (11) configured to encode and/or encrypt transaction data (12) provided by at least one of the plurality of contracting parties to generate a private transaction package (13);
wherein the distributed ledger (30) is configured to process the private transaction package (13) in the private digital SLA (31) to generate a positive or negative validation result (33);
wherein the content of the SLA conditions and the content of the input data are not revealed in the distributed ledger (30).

8. System according to claim 7, wherein the SLA conditions comprise logical expressions that can be evaluated to true or false given a specific set of input parameters, the logical expressions including operations and constant values wherein the operations comprise at least one of the group selected from mathematical operations, logical operations, and set operations.

9. System according to any of claims 7 to 8, wherein the data encoder comprises a ZKP generator (14).

10. System according to any of claims 7 to 9, wherein the distributed ledger comprises a ZKP verifier (35).
